# EUROPÄISCHE PATENTSCHRIFT

(11) **EP 3 103 656 B1**
(45) Veröffentlichungstag und Bekanntmachung des Hinweises auf die Patenterteilung: **31.01.2018**
(21) Anmeldenummer: 16156797.9
(22) Anmeldetag: 23.02.2016
(51) Int. Cl.: B60C 9/04

(54) **FAHRZEUGLUFTREIFEN**
PNEUMATIC TYRE FOR A VEHICLE
PNEUMATIQUE DE VÉHICULE

(30) Priorität: 12.06.2015 DE 102015210838
(43) Veröffentlichungstag der Anmeldung: 14.12.2016
(73) Patentinhaber: Continental Reifen Deutschland GmbH, 30165 Hannover (DE)
(72) Erfinder: Meiners, Christian, 30459 Hannover (DE); Fries, Volkmar, 31707 Bad Eilsen (DE)
(74) Vertreter: Finger, Karsten

(56) Entgegenhaltungen:
- DE-T2- 60 220 215
- JP-A- H06 115 308
- JP-A- 2002 067 614

## Beschreibung

Die Erfindung betrifft einen Fahrzeugluftreifen, insbesondere für Schwerlastfahrzeuge, Busse, Gabelstapler oder Fahrzeuge für Containerbewegung oder Erdbewegung, in Radialbauart mit einer zumindest einlagigen Radialkarkasse, welche als Festigkeitsträger Stahlkorde enthält, deren Bruchkraft 800 N bis 10000 N beträgt, wobei die zumindest eine Karkasslage der Radialkarkasse zwei Typen von Stahlkorden enthält, die unterschiedliche Bruchkraft aufweisen und wobei jeweils zumindest ein Stahlkord mit der höheren Bruchkraft mit mehreren Stahlkorden mit der geringeren Bruchkraft abwechselt.

Karkasslagen in Fahrzeugluftreifen für Schwerlastfahrzeuge oder Busse enthalten üblicherweise Stahlkorde eines einzigen Kordtyps bzw. einer einzigen Kordkonstruktion. Bei bestimmten Beanspruchungen der Fahrzeugluftreifen, insbesondere jenseits der zulässigen Einsatzbedingungen, beispielsweise nach einer Vorschädigung infolge zu geringen Innendrucks, bei Überlast, bei Berührung von Zwillingsreifen und dergleichen, kann die Bruchkraft der Korde überschritten werden, sodass typischerweise ein Kord bricht, wodurch die von den benachbarten Korden aufzunehmende Kraft ansteigt. Ein solcher Bruch kann sich dann in der Karkasslage mit hoher Geschwindigkeit fortsetzen. Dieses Phänomen wird als "Zipper-Effekt" bezeichnet. Als typische Verbesserungsmaßnahme kommt eine gleichmäßige Verstärkung aller Korde in der Karkasslage in Betracht, dies führt jedoch zu einer erheblichen Verteuerung der Fahrzeugluftreifen.

Aus der DE 602 20 215 T2 ist ein Fahrzeugluftreifen der eingangs genannten Art bekannt, bei welchem die Karkasslage als Karkasskorde Hauptkorde, welche dem Verstärkungszweck dienen, und Zusatzkorde, welche zum Steuern der Ausströmung von Gummierungsgummi während der Reifenvulkanisierung dienen, aufweist. Die Zusatzkorde weisen eine Dicke in einem Bereich des 0,1- bis 0,67-Fachen der Dicke der Hauptkorde auf, ihre Anzahl zwischen jeweils zwei benachbarten Hauptkorden beträgt 1 bis 3. Die Hauptkorde können organische Korde, Polyesterkorde oder Stahlkorde sein, die Zusatzkorde können Nylonkorde, Stahlkorde oder ebenfalls organische Korde sein.

Die Zusatzkorde weisen eine wesentlich geringere Festigkeit als die Hauptkorde auf, ihre Festigkeit beträgt nicht mehr als das 0,3-Fache der Kordfestigkeit der Hauptkorde. Diese Erfindung zielt darauf ab, das Reifengewicht zu reduzieren, ohne die Haltbarkeit zu verschlechtern. Es wird daher die für die Karkasslage erforderliche Festigkeit durch die Hauptkorde bereitgestellt.

Der Erfindung liegt die Aufgabe zu Grunde, das unter entsprechenden Einsatzbedingungen auftretende, relativ schlagartige Versagen der Reifenstruktur durch das Auftreten des Zipper-Effektes zu verhindern, ohne eine gleichmäßige Verstärkung sämtlicher Korde in Kauf nehmen zu müssen.

Gelöst wird die gestellte Aufgabe erfindungsgemäß dadurch, dass die Stahlkorde mit der größeren Bruchkraft eine um 20 % bis 100 % größere Bruchkraft aufweisen als die Stahlkorde mit der geringeren Bruchkraft, wobei jeweils zumindest ein Stahlkord mit der höheren Bruchkraft mit drei bis zwölf Stahlkorden mit der geringeren Bruchkraft abwechselt.

Gemäß der Erfindung werden daher in einer Karkasslage Stahlkorde unterschiedlicher Bruchkraft verwendet. Bei einer zu hohen äußeren Beanspruchung tritt daher zunächst ein Bruch in den Stahlkorden mit der niedrigeren Bruchkraft auf. Dieser Bruch setzt sich voraussichtlich lediglich so weit fort, bis einer der Korde mit der höheren Bruchkraft erreicht wird. An dieser Stelle kommt der Bruch zum Stillstand, sofern nicht die von außen wirkende Kraft auch die höhere Bruchkraft dieser Korde erreicht. Bei den typischen Überbeanspruchungen bzw. äußeren Krafteinwirkungen bleiben jedoch die widerstandsfähigeren Stahlkorde mit der höheren Bruchkraft intakt und ein Fortschreiten des Bruchs zu den nächsten Stahlkorden geringerer Bruchkraft wird verhindert.

Besonders bevorzugt ist eine Ausführung, bei der die Anzahl der Stahlkorde mit der geringeren Bruchkraft, die jeweils mit zumindest einem Stahlkord mit der höheren Insbesondere bei Reifen, die hohen Belastungen im Betrieb ausgesetzt sind, kann es auch von Vorteil sein, wenn die Anzahl der Stahlkorde mit der geringeren Bruchkraft, die jeweils mit zumindest einem Stahlkord mit der höheren Bruchkraft abwechseln, innerhalb einer Karkasslage variiert wird. Sind in einem Reifen zwei Karkasslagen vorgesehen so können die betreffenden Anzahlen der Stahlkorde mit höherer und geringerer Bruchkraft auch von Karkasslage zu Karkasslage variieren.

Besonders bevorzugt ist eine Ausführung der Erfindung, bei der innerhalb einer Karkasslage der gegenseitige Abstand der Stahlkorde zumindest im Wesentlichen konstant ist. Auch diese Maßnahme kann aus Gründen der Reifengleichförmigkeit vorteilhaft sein.

Die Anzahl der Stahlkorde mit der höheren Bruchkraft, welche abwechselnd mit Stahlkorden mit der geringeren Bruchkraft vorgesehen sind, beträgt insbesondere bis zu zwei Stahlkorde. Diese Maßnahme bietet eine optimale Sicherheit beim Auftreten des oben erwähnten Zipper-Effektes.

Bei den meisten Fahrzeugluftreifen ist es ausreichend, wenn gemäß einem weiteren Merkmal der Erfindung die Stahlkorde mit der größeren Bruchkraft eine um bis zu 60% größere Bruchkraft aufweisen als die Stahlkorde mit der geringeren Bruchkraft.

Eine weitere erfindungsgemäße Maßnahme, die je nach Einsatzweck und der zu erwartenden Belastung des Fahrzeugluftreifens getroffen wird, besteht darin, dass jeweils zumindest ein Stahlkord mit der höheren Bruchkraft mit mindestens vier, insbesondere mit vier bis zehn und vorzugsweise mit bis zu sechs Stahlkorden mit der geringeren Bruchkraft abwechselt.

Bei einer Ausführungsvariante der Erfindung kann die unterschiedliche Bruchkraft der Stahlkorde auf unterschiedlichen Stahlkordkonstruktionen basieren. Besonders bevorzugt sind dabei Konstruktionen, bei welchen die Stahlkorde mit der geringeren Bruchkraft einen Durchmesser aufweisen, welcher das 0,7- bis 0,9-Fache des Durchmessers der Stahlkorde mit der größeren Bruchkraft beträgt.

Bei einer anderen Ausführungsvariante der Erfindung können die Stahlkorde unterschiedlicher Bruchkraft aus Stahl unterschiedlicher Festigkeitsklassen bestehen. In diesem Fall können sogar die Stahlkorde unterschiedlicher Bruchkraft gleiche Konstruktionen aufweisen, was für die Reifengleichförmigkeit von Vorteil sein kann.

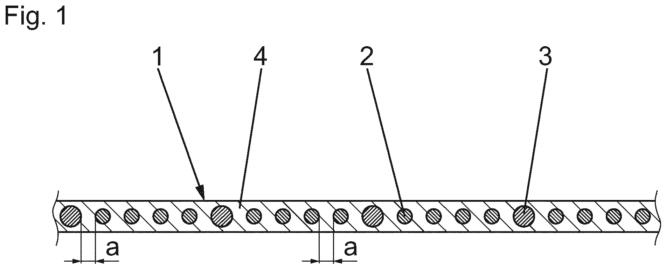

Weitere Merkmale, Vorteile und Einzelheiten der Erfindung werden nun anhand der schematischen Fig. 1, welche im Querschnitt einen Ausschnitt einer Karkasslage eines Fahrzeugluftreifens darstellt, näher beschrieben.

Fig. 1 zeigt einen Ausschnitt des Querschnittes einer Karkasslage 1 eines Fahrzeugluftreifens in Radialbauart. insbesondere eines Reifens für Schwerlastfahrzeuge, Busse, Gabelstapler oder Fahrzeuge für Containerbewegung oder Erdbewegung. Karkasslagen 1 gemäß Fig. 1 bilden einlagig oder zweilagig die Radialkarkasse des Fahrzeugluftreifens, in welcher die in die Karkasslage 1 eingebetteten Festigkeitsträger in radialer Richtung oder unter einem kleinen Winkel von insbesondere bis zu 10° zur radialen Richtung verlaufen. Die Festigkeitsträger in erfindungsgemäß ausgeführten Karkasslagen 1 sind Stahlkorde 2 und 3, welche in an sich bekannter Weise aus einer Anzahl von Stahlfilamenten bestimmter Durchmesser bestehen. In der Karkasslage 1 sind die Stahlkorde 2, 3 in eine sogenannte Karkassgummierung 4 eingebettet, sodass die Dicke der Karkasslage 1, je nach Ausführung der Stahlkorde 2, 3, in der Größenordnung von 1,2 mm bis 8,0 mm beträgt.

Der gegenseitige Abstand a der Stahlkorde 2, 3 in der Karkasslage 1 entspricht dem in Karkasslagen von LKW-Reifen und Busreifen üblichen Abstand und ist innerhalb der Karkasslage 1 konstant bzw. im Wesentlichen konstant.

Die in der erfindungsgemäß ausgeführten Karkasslage 1 enthaltenen Stahlkorde 2 und 3 weisen unterschiedliche Bruchkräfte auf und gehören daher zu unterschiedlichen Kordtypen, die sich insbesondere auch hinsichtlich ihrer Konstruktion voneinander unterscheiden. Innerhalb eines Bruchkraftbereiches von 800 N bis 10000 N weisen die Stahlkorde 3 eine um 20 % bis 100 %, insbesondere um 20 % bis 60 %, größere Bruchkraft auf als die Stahlkorde 2. In einer erfindungsgemäßen Karkasslage 1 ist jeder x-te Stahlkord mit x = 3 bis 12, insbesondere x = 4 bis 10, vorzugsweise mit x = bis zu 6, ein Stahlkord 3, wobei in einer bestimmten Karkasslage 1 der gewählte Wert von x vorzugsweise konstant ist, aber auch in den angegebenen Bereichen variieren kann. Fig. 1 zeigt eine Ausführungsvariante, bei welcher jede fünfte Stahlkord ein Stahlkord 3 ist, zwischen zwei benachbarten Stahlkorden 3 befinden sich daher vier Stahlkorde 2 mit geringerer Bruchkraft. Der gegenseitige Abstand a der Stahlkorde 2, 3 zwischen den Stahlkorden 2, 3 ist, wie oben erwähnt, konstant. Die Stahlkorde 2 und 3 weisen, wie bereits erwähnt, bei einer Ausführungsvariante der Erfindung unterschiedliche Konstruktionen auf, sodass infolge der unterschiedlichen Bruchkraft der Stahlkorde 2 und 3 der Durchmesser der Stahlkorde 2 geringer ist als jener der Stahlkorde 3. Die Stahlkorde 2 mit der geringeren Bruchkraft weisen einen Durchmesser auf, welcher insbesondere das 0,7-Fache bis 0,9-Fache des Durchmessers der Stahlkorde 3 mit der größeren Bruchkraft beträgt.

Bei einer weiteren nicht dargestellten Ausführungsvariante der Erfindung können jeweils zwei Stahlkorde 3 mit höherer Bruchkraft nebeneinander verlaufend in der Karkasslage 1 angeordnet sein.

Bei einem konkreten Ausführungsbeispiel kann in der Karkasslage 1 der Stahlkord 2 mit der geringeren Bruchkraft ein Kord der Konstruktion 3 × 0,20 mm + 9 × 0,175 mm sein, der Stahlkord 3 mit der größeren Bruchkraft kann ein Stahlkord der Konstruktion 0,22 mm + 18 × 0,20 mm.

Bei einer alternativen Ausführungsform der Erfindung kann eine unterschiedliche Bruchkraft durch unterschiedliche Materialeigenschaften der Stahlkorde 2 und 3 erzielt werden. So kann für den Stahlkord 3 ein Stahl einer höheren Festigkeitsklasse, beispielsweise ein Ultra High Tensile-Stahl und für den Stahlkord 2 ein Stahl einer geringeren Festigkeitsklasse, beispielsweise ein Normal High Tensile-Stahl verwendet werden. Dabei können die Stahlkorde die gleiche Konstruktion aufweisen.

### Bezugsziffernliste

- 1 ....................: Karkasslage
- 2 ....................: Stahlkord
- 3 ....................: Stahlkord
- 4 ....................: Karkassgummierung

## Patentansprüche

1. Fahrzeugluftreifen, insbesondere für Schwerlastfahrzeuge, Busse, Gabelstapler oder Fahrzeuge für Containerbewegung oder Erdbewegung, in Radialbauart mit einer zumindest einlagigen Radialkarkasse, welche als Festigkeitsträger Stahlkorde (2, 3) enthält, deren Bruchkraft 800 N bis 10000 N beträgt, wobei die zumindest eine Karkasslage (1) der Radialkarkasse zwei Typen von Stahlkorden (2, 3) enthält, die unterschiedliche Bruchkraft aufweisen und wobei jeweils zumindest ein Stahlkord (3) mit der höheren Bruchkraft mit mehreren Stahlkorden (2) mit der geringeren Bruchkraft abwechselt,
**dadurch gekennzeichnet,**
**dass** die Stahlkorde (3) mit der größeren Bruchkraft eine um 20 % bis 100 % größere Bruchkraft aufweisen als die Stahlkorde (2) mit der geringeren Bruchkraft, wobei jeweils zumindest ein Stahlkord (3) mit der höheren Bruchkraft mit drei bis zwölf Stahlkorden (2) mit der geringeren Bruchkraft abwechselt.

2. Fahrzeugluftreifen nach Anspruch 1, **dadurch gekennzeichnet, dass** die Anzahl der Stahlkorde (2) mit der geringeren Bruchkraft, die jeweils mit zumindest einem Stahlkord (3) mit der höheren Bruchkraft abwechseln, innerhalb einer Karkasslage (1) konstant ist.

3. Fahrzeugluftreifen nach Anspruch 1, **dadurch gekennzeichnet, dass** die Anzahl der Stahlkorde (2) mit der geringeren Bruchkraft, die jeweils mit zumindest einem Stahlkord (3) mit der höheren Bruchkraft abwechseln, innerhalb einer Karkasslage (1) variiert.

4. Fahrzeugluftreifen nach einem der Ansprüche 1 bis 3, **dadurch gekennzeichnet, dass** innerhalb einer Karkasslage (1) der gegenseitige Abstand (a) der Stahlkorde (2, 3) zumindest im Wesentlichen konstant ist..

5. Fahrzeugluftreifen nach einem der Ansprüche 1 bis 4, **dadurch gekennzeichnet, dass** jeweils ein oder zwei Stahlkorde (3) mit der höheren Bruchkraft mit den Stahlkorden (2) mit der geringeren Bruchkraft abwechseln.

6. Fahrzeugluftreifen nach einem der Ansprüche 1 bis 5, **dadurch gekennzeichnet, dass** die Stahlkorde (3) mit der größeren Bruchkraft eine um bis zu 60 % größere Bruchkraft aufweisen als die Stahlkorde (2) mit der geringeren Bruchkraft.

7. Fahrzeugluftreifen nach einem der Ansprüche 1 bis 6, **dadurch gekennzeichnet, dass** jeweils zumindest ein Stahlkord (3) mit der höheren Bruchkraft mit mindestens vier, insbesondere mit vier bis zehn, vorzugsweise mit bis zu sechs, Stahlkorden (2) mit der geringeren Bruchkraft abwechselt.

8. Fahrzeugluftreifen nach einem der Ansprüche 1 bis 7, **dadurch gekennzeichnet, dass** die Stahlkorde (2, 3) unterschiedlicher Bruchkraft unterschiedliche Konstruktionen aufweisen.

9. Fahrzeugluftreifen nach einem der Ansprüche 1 bis 8, **dadurch gekennzeichnet, dass** die Stahlkorde (2) mit der geringeren Bruchkraft einen Durchmesser aufweisen, welcher das 0,7- bis 0,9-Fache des Durchmessers der Stahlkorde (3) mit der größeren Bruchkraft beträgt.

10. Fahrzeugluftreifen nach einem der Ansprüche 1 bis 9, **dadurch gekennzeichnet, dass** die Stahlkorde (2, 3) unterschiedlicher Bruchkraft aus Stahl unterschiedlicher Festigkeitsklassen bestehen.

11. Fahrzeugluftreifen nach Anspruch 10, **dadurch gekennzeichnet, dass** die Stahlkorde (2, 3) unterschiedlicher Bruchkraft und aus Stahl unterschiedlicher Festigkeitsklassen gleiche Konstruktionen aufweisen.

## Claims

1. Pneumatic vehicle tyre, in particular for heavy goods vehicles, buses, forklift trucks or container-moving or earth-moving vehicles, of radial type of construction with an at least single-ply radial carcass which, as strengthening members, comprises steel cords (2, 3), the breaking force of which amounts to 800 N to 10,000 N, wherein the at least one carcass ply (1) of the radial carcass comprises two types of steel cords (2, 3) which have different breaking forces, and wherein in each case at least one steel cord (3) with the higher breaking force alternates with multiple steel cords (2) with the lower breaking force,
**characterized**
**in that** the steel cords (3) with the higher breaking force have a breaking force which is 20% to 100% higher than the steel cords (2) with the lower breaking force, wherein in each case at least one steel cord (3) with the higher breaking force alternates with three to twelve steel cords (2) with the lower breaking force.

2. Pneumatic vehicle tyre according to Claim 1, **characterized in that** the number of steel cords (2) with the lower breaking force that alternate in each case with the at least one steel cord (3) with the higher breaking force is constant within a carcass ply (1).

3. Pneumatic vehicle tyre according to Claim 1, **characterized in that** the number of steel cords (2) with the lower breaking force that alternate in each case with the at least one steel cord (3) with the higher breaking force varies within a carcass ply (1).

4. Pneumatic vehicle tyre according to one of Claims 1 to 3, **characterized in that**, within a carcass ply (1), the spacing (a) between the steel cords (2, 3) is at least substantially constant.

5. Pneumatic vehicle tyre according to one of Claims 1 to 4, **characterized in that** in each case one or two steel cords (3) with the higher breaking force alternate with the steel cords (2) with the lower breaking force.

6. Pneumatic vehicle tyre according to one of Claims 1 to 5, **characterized in that** the steel cords (3) with the higher breaking force have a breaking force which is 60% higher than the steel cords (2) with the lower breaking force.

7. Pneumatic vehicle tyre according to one of Claims 1 to 6, **characterized in that** in each case at least one steel cord (3) with the higher breaking force alternates with at least four, in particular with four to ten, preferably with up to six, steel cords (2) with the lower breaking force.

8. Pneumatic vehicle tyre according to one of Claims 1 to 7, **characterized in that** the steel cords (2, 3) with different breaking force have different constructions.

9. Pneumatic vehicle tyre according to one of Claims 1 to 8, **characterized in that** the steel cords (2) with the lower breaking force have a diameter which amounts to 0.7 to 0.9 times the diameter of the steel cords (3) with the higher breaking force.

10. Pneumatic vehicle tyre according to one of Claims 1 to 9, **characterized in that** the steel cords (2, 3) with different breaking force are composed of steels of different strength classes.

11. Pneumatic vehicle tyre according to Claim 10, **characterized in that** the steel cords (2, 3) with different breaking force and composed of steels of different strength classes have identical constructions.

## Revendications

1. Pneumatique de véhicule, en particulier pour des véhicules poids-lourds, des bus, des chariots élévateurs à fourche ou des véhicules pour le déplacement de conteneurs ou pour le terrassement, de construction radiale, comprenant une carcasse radiale ayant au moins une couche, qui contient, en tant que renforts, des câbles d'acier (2, 3) dont la force de rupture vaut 800 N à 10000 N, l'au moins une couche de carcasse (1) de la carcasse radiale contenant deux types de câbles d'acier (2, 3) qui présentent une force de rupture différente et à chaque fois au moins un câble d'acier (3) ayant une plus grande force de rupture alternant avec plusieurs câbles d'acier (2) ayant une plus faible force de rupture,
**caractérisé en ce que**
les câbles d'acier (3) ayant la plus grande force de rupture présentent une force de rupture supérieure de 20 % à 100 % à celle des câbles d'acier (2) ayant la plus faible force de rupture, à chaque fois au moins un câble d'acier (3) ayant la plus grande force de rupture alternant avec trois à douze câbles d'acier (2) ayant la plus faible force de rupture.

2. Pneumatique de véhicule selon la revendication 1, **caractérisé en ce que** le nombre des câbles d'acier (2) ayant la plus faible force de rupture, qui alternent à chaque fois avec au moins un câble d'acier (3) ayant la plus grande force de rupture, est constant à l'intérieur d'une couche de carcasse (1).

3. Pneumatique de véhicule selon la revendication 1, **caractérisé en ce que** le nombre des câbles d'acier (2) ayant la plus faible force de rupture, qui alternent à chaque fois avec au moins un câble d'acier (3) ayant la plus grande force de rupture, varie à l'intérieur d'une couche de carcasse (1).

4. Pneumatique de véhicule selon l'une quelconque des revendications 1 à 3, **caractérisé en ce qu'**à l'intérieur d'une couche de carcasse (1), la distance mutuelle (a) des câbles d'acier (2, 3) est au moins essentiellement constante.

5. Pneumatique de véhicule selon l'une quelconque des revendications 1 à 4, **caractérisé en ce qu'**à chaque fois un ou deux câbles d'acier (3) ayant la plus grande force de rupture alternent avec les câbles d'acier (2) ayant la plus faible force de rupture.

6. Pneumatique de véhicule selon l'une quelconque des revendications 1 à 5, **caractérisé en ce que** les câbles d'acier (3) ayant la plus grande force de rupture présentent une force de rupture supérieure de jusqu'à 60 % à celle des câbles d'acier (2) ayant la plus faible force de rupture.

7. Pneumatique de véhicule selon l'une quelconque des revendications 1 à 6, **caractérisé en ce qu'**à chaque fois au moins un câble d'acier (3) ayant la plus grande force de rupture alterne avec au moins quatre, en particulier avec quatre à dix, de préférence avec jusqu'à six, câbles d'acier (2) ayant la plus faible force de rupture.

8. Pneumatique de véhicule selon l'une quelconque des revendications 1 à 7, **caractérisé en ce que** les câbles d'acier (2, 3) ayant des forces de rupture différentes présentent des constructions différentes.

9. Pneumatique de véhicule selon l'une quelconque des revendications 1 à 8, **caractérisé en ce que** les câbles d'acier (2) ayant la plus faible force de rupture présentent un diamètre qui vaut 0,7 à 0,9 fois le diamètre des câbles d'acier (3) ayant la plus grande force de rupture.

10. Pneumatique de véhicule selon l'une quelconque des revendications 1 à 9, **caractérisé en ce que** les câbles d'acier (2, 3) ayant une force de rupture différente se composent d'acier ayant des classes de solidité différentes.

11. Pneumatique de véhicule selon la revendication 10, **caractérisé en ce que** les câbles d'acier (2, 3) ayant une force de rupture différente et constitués d'acier ayant des classes de solidité différentes présentent des constructions identiques.
